# EUROPÄISCHE PATENTANMELDUNG

(11) **EP 2 253 678 A1**
(43) Veröffentlichungstag der Anmeldung: **24.11.2010**
(21) Anmeldenummer: 09006669.7
(22) Anmeldetag: 18.05.2009
(51) Int. Cl.: C09D 1/02, C09D 5/00, C09D 5/02, C09D 7/12

(54) **Sportplatzmarkierungsfarbe**

(71) Anmelder: Pufas Werk KG, 34346 Hann Münden (DE)
(72) Erfinder: Pilski, Jacek, Dr., 04299 leipzig (DE)
(74) Vertreter: Ring & Weisbrodt

(57) **Zusammenfassung**

Die Erfindung betrifft eine Markierungsfarbe für Sportplätze, insbesondere Rasenmarkierungsfarbe, welche 0,1 - 10 Gew.-% Mikroglashohlkugeln, 0,1 - 20 Gew.-% eines wasserverdünnbaren Bindemittels sowie 1 - 60 Gew.-% an Pigmenten und Füllstoffen enthält, jeweils bezogen auf die Gesamtzusammensetzung. Die Erfindung betrifft des Weiteren ein Verfahren zur Erstellung von Markierungen auf einem Sportplatz mit der Markierungsfarbe sowie schließlich die Verwendung von Mikroglashohlkugeln in Markierungsfarben für Sportplätze zur Verbesserung des Reflexionsvermögens.

## Beschreibung

Die vorliegende Erfindung betrifft eine Markierungsfarbe zur vorübergehenden Linienmarkierung von Sportplätzen, insbesondere in Form einer Rasenmarkierungsfarbe. Die Erfindung betrifft ferner ein Verfahren zur Erstellung einer Linienmarkierung auf Sportplätzen mit Hilfe der erfindungsgemäßen Markierungsfarbe sowie die Verwendung von Mikroglashohlkugeln zur Verbesserung des Reflexionsvermögens von Markierungsfarben für Sportplätze.

Sportplatzmarkierungsfarben sind hinlänglich bekannt. Sie besitzen meistens eine weisse Farbe; nur im Winter, auf mit Schnee bedeckten Sportplätzen werden sie farbig - hauptsächlich in rot, blau oder grün - verwendet.

Im ursprünglich einfachsten Falle werden zur Markierung von Linien auf Sportplätzen, wie beispielsweise Fußball-, Feldhockey- oder Rasentennisfeldern Linien aus Kreide oder Kalkmehl aufgebracht. Nachteilig bei diesen Linienmarkierungen ohne Bindemittel ist, dass die Linien leicht verwischen und im Regen schnell abgespült werden. Im übrigen wird die ätzende Wirkung von gebranntem Kalkmehl ebenfalls als nachteilig empfunden.

Aus diesem Grunde werden bereits seit längerem bindemittelhaltige Sportplatzmarkierungsfarben eingesetzt, die ein verbessertes Haftungsvermögen besitzen. Die bei diesen Sportplatzmarkierungsfarben verwendeten Farbpigmente führen zwar bei guten Lichtverhältnissen zu einer guten Erkennbarkeit der Linienmarkierung, jedoch bei Dämmerung oder allgemein schlechten Sichtverhältnissen ist die Verwendung einer zusätzlichen Lichtquelle, wie beispielsweise Flutlichtanlagen, bereits sehr frühzeitig unerlässlich. Dabei kann nicht nur die nicht optimale Erkennbarkeit der Linien als nachteilig empfunden werden, sondern insbesondere auch die zu deren Kompensation benötigte elektrische Energie für die zusätzliche Beleuchtung, die mit erheblichen Betriebskosten verbunden ist.

Die der vorliegenden Erfindung zugrunde liegende Aufgabe besteht darin, eine Markierungsfarbe zu schaffen, die ein verbessertes Reflexionsvermögen von sichtbarem Licht aufweist, so dass die mit dieser Markierungsfarbe erstellten Linienmarkierungen selbst bei schlechten Sichtverhältnissen oder in der Dämmerung ohne den Einsatz einer zusätzlichen Beleuchtung gut erkennbar sind, bzw. beim Einsatz solcher Lichtquellen eine verbesserte Sichtbarkeit aufweisen.

Diese Aufgabe wird gelöst durch eine Markierungsfarbe für Sportplätze, insbesondere durch eine Rasenmarkierungsfarbe, enthaltend
a) 0,1 - 10 Gew.-% Mikroglashohlkugeln,
b) 0,1 - 20 Gew.-% eines wasserverdünnbaren Bindemittels gerechnet als Feststoffanteil,
c) 1 - 60 Gew.-% an Pigmenten und Füllstoffen sowie
d) auf 100 Gew.-% ergänzte Anteile an Wasser,
   jeweils bezogen auf die Gesamtzusammensetzung der Markierungsfarbe.

Überraschenderweise hat sich herausgestellt, dass der Einsatz von Mikroglashohlkugeln in der Markierungsfarbe das Reflexionsvermögen dieser Markierungsfarbe im sichtbaren Bereich des Lichtspektrums erheblich verbessert, obwohl die Mikroglashohlkugeln in der Markierungsfarbe dispergiert und daher durch die übrigen Bestandteile der Farbe überzogen sind.

Unter einer Markierungsfarbe für Sportplätze wird im Sinne der vorliegenden Erfindung in erster Linie eine Farbe zur Markierung auf Natur- und Kunstrasen oder Ascheplätzen verstanden, bei denen die Markierung nicht zwingend dauerhaft angelegt wird, auch wenn die Anwendung auf anderen Untergründen ebenso denkbar ist.

Als wasserverdünnbares Bindemittel können im Prinzip sämtliche, an sich für die Herstellung von Klebstoffen, Beschichtungen oder Farben bekannte Bindemittel eingesetzt werden. Dabei handelt es sich im einfachsten Fall um eine wässrige Polymerdispersion oder -emulsion eines natürlichen oder synthetischen Polymers.

Unter Pigmenten werden alle üblicherweise für die Farbgebung eingesetzten organischen oder anorganischen Feststoffe verstanden. Diese organischen oder anorganischen Pigmente können weiß oder farbig sein und sind im Anwendungsmedium unlöslich. Beispiele hierfür sind Titandioxid und Azo-Pigmente.

Unter Füllstoffen werden im Sinne der vorliegenden Erfindung anorganische oder organische Feststoffe verstanden, die, wie auch die Pigmente in der Regel als feinteiliger Bestandteil mit einer mittleren Teilchengröße von bis zu 100 µm in der Markierungsfarbe eingesetzt werden.

Zur Herstellung der erfindungsgemäßen Markierungsfarbe werden die Einzelbestandteile im einfachsten Falle innig miteinander vermischt, bis eine äußerlich homogene Mischung entsteht. Hierbei ist es von Vorteil, wenn die Mirkoglashohlkugeln erst gegen Ende des Herstellvorgangs eingerührt werden, da diese durch die Scherkräfte beim Mischvorgang zerstört werden können.

Eine Weiterbildung der erfindungsgemäßen Markierungsfarbe sieht vor, dass die eingesetzten Mikroglashohlkugeln einen mittleren Außendurchmesser von 1 bis 200 µm, bevorzugt von 5 bis 150 µm, besonders bevorzugt von 10 bis 100 µm, ganz besonders bevorzugt von 30 bis 85 µm aufweisen. Dies ist besonders vorteilhaft, da die Verbesserung des Reflexionsvermögens der erfindungsgemäßen Markierungsfarbe beim Einsatz von Mikrohohlkugeln in diesen Größenbereichen besonders ausgeprägt ist.

Im Rahmen der vorliegenden Erfindung eingesetzten Mikroglashohlkugeln können unter Verwendung der an sich bekannten Glasarten, wie beispielsweise Borosilikatglas, hergestellt sein. Dabei sollten die Mikroglashohlkugeln eine weitestgehend unbeschädigte Oberfläche aufweisen, das heißt, ein möglichst großer Anteil der eingesetzten Mikroglashohlkugeln sollte eine unbeschädigte Oberfläche besitzen.

Gemäß einer Weiterbildung der erfindungsgemäßen Markierungsfarbe weisen die Mikroglashohlkugeln eine Wandstärke von 0,5 bis 25 µm, bevorzugt 1 bis 10 µm auf. Dies ist besonders vorteilhaft, weil Mikroglashohlkugeln mit derartigen Wandstärken eine ausreichende Stabilität besitzen, um beim Herstellprozess der Markierungsfarbe nicht durch den Mischvorgang beschädigt zu werden. Dasselbe gilt auch für das Ausbringen der mit diesen Mikroglashohlkugeln versehenen Markierungsfarbe auf ein Spielfeld, beispielsweise über Aufdüsen, bei dem die Mikroglashohlkugeln ebenfalls mechanischen Belastungen ausgesetzt sind, denen die Mikroglashohlkugeln widerstehen sollten.

Nach einer besonders bevorzugten Ausführungsform der erfindungsgemäßen Markierungsfarbe ist das wasserverdünnbare Bindemittel vollständig biologisch abbaubar. Hierunter wird ein Bindemittel verstanden, das durch Mikroorganismen, Enzyme oder durch Hydrolyse zum Beispiel im Boden abgebaut wird. Insbesondere werden hierunter Bindemittel verstanden, die die Prüfungskriterien bezüglich der biologischen Abbaubarkeit der DIN-Norm EN 13 432 erfüllen.

Gemäß einer bevorzugten Ausführungsform der erfindungsgemäßen Markierungsfarbe ist das eingesetzte wasserverdünnbare Bindemittel ausgewählt aus wässrigen Dispersionen oder Emulsionen eines Natur- oder Kunstharzes, wie beispielweise eines Alkyd-, Polyvinylacetat- oder Polyacrylatharzes oder ihrer Copolymere, aus Leimen, insbesondere Casein- oder Knochenleim, Cellulose- oder Stärkederivaten, wie beispielsweise Cellulose-, Stärkeether oder Cellulose- oder Stärkeester, Wasserglaslösungen oder Mischungen von diesen. Diese wasserverdünnbaren Bindemittel sind besonders vorteilhaft, da sie eine gute Haftung der erfindungsgemäßen Markierungsfarbe, beispielsweise auf Natur- oder Kunstrasen ermöglichen. Darüber hinaus lassen sich die Mikroglashohlkugein und Pigmente bzw. anorganische Füllstoffe gut in den wässrigen Dispersionen dieser Bindemittel einarbeiten.

Nach einer bevorzugten Ausführungsform der erfindungsgemäßen Markierungsfarbe weist diese einen Wassergehalt von 20 bis 80 Gew.-% auf, bevorzugt von 30 bis 70 Gew.-%, besonders bevorzugt von 40 bis 60 Gew.-%, jeweils bezogen auf die Gesamtzusammensetzung. Markierungsfarben mit einem derartigen Wassergehalt lassen sich leicht durch die üblichen Sprühverfahren auf eine Rasenoberfläche ausbringen und erreichen dabei gleichzeitig eine hohe Deckkraft.

Gemäß einer weiteren bevorzugten Ausführungsform der erfindungsgemäßen Markierungsfarbe sind die Pigmente ausgewählt aus Titandioxiden mit unbehandelter oder behandelter Oberfläche, Zinkoxid, Zinksulfid oder Mischungen von diesen. Diese Pigmente zeichnen sich dadurch aus, dass sie beim Einsatz in der erfindungsgemäßen Markierungsfarbe vor allem in Kombination mit den Mikroglashohlkugeln zu einer verbesserten Helligkeit und somit Sichtbarkeit der mit einer solchen Markierungsfarbe hergesellten Linien auf einem Spielfeld, insbesondere bei schlechten Sichtbedingungen führen.

Erfindungsgemäß kann des weiteren vorgesehen sein, dass es sich bei den in der Markierungsfarbe eingesetzten Füllstoffen um anorganische Füllstoffe handelt, die insbesondere ausgewählt sind aus Carbonaten, Metalloxiden, Silikaten oder Mischungen von diesen. Bevorzugt sind dies Kreide, Calcite, Dolomite, Siliciumdioxid, Talkum, Kaolin oder Mischungen dieser Verbindungen. Diese Füllstoffe haben großen Einfluß auf Eigenschaften der Markierungsfarbe insgesamt, wobei sie vor allem durch ihre weiße Eigenfärbung bei weißen Linienmarkierungen zur Verbesserung der Helligkeit und somit der Sichtbarkeit beitragen.

Nach einer weiteren Ausführungsform der erfindungsgemäßen Markierungsfarbe enthält diese 30 bis 55 Gew.-% an Pigmenten und anorganischen Füllstoffen bezogen auf die Gesamtzusammensetzung.

Die erfindungsgemäße Markierungsfarbe kann außerdem weitere Hilfsstoffe enthalten, wie Netzmittel, Dispergierhilfsmittel, Stabilisatoren, Verdickungsmittel, Konservierungsstoffe, Filmbildner, pH-Regulatoren, Tenside, Farbstoffe, Biozide, Thixotropiermittel und Entschäumer. Mit Hilfe dieser an sich bekannten Hilfsstoffe ist es möglich, die erfindungsgemäße Markierungsfarbe exakt auf die gewünschten Anwendungsbedinungen einzustellen.

Als Entschäumer kann beispielsweise eine Kombination von flüssigen Kohlenwasserstoffen, Polyglykolen und amorpher Kieselsäure eingesetzt werden oder auch Silikonöle. Solche Entschäumer können insbesondere in Mengen von 0,001 bis 3 Gew.-%, vorzugsweise 0,05 bis 1 Gew.-%, bezogen auf die Gesamtzusammensetzung der Markierungsfarbe, eingesetzt werden.

Die Stabilisierungsmittel können beispielsweise ausgewählt sein aus Bentoniten oder aber auf Basis von Cellulose oder Cellulosederivaten (z. B. Hydroxyethylcellulose ausgebildet sein). Gleichermaßen können verschiedene Stabilisierungsmittel miteinander kombiniert werden.

Gemäß einer besonders bevorzugten Ausführungsform der erfindungsgemäßen Markierungsfarbe ist diese weitestgehend frei von organischen Lösemitteln. Ganz besonders bevorzugt weist die erfindungsgemäße Markierungsfarbe einen Gehalt an solchen organischen Lösemitteln lediglich im Spurenbereich auf. Dies ist besonders vorteilhaft, da derartige Markierungsfarben nicht nur umweltverträglicher sind, sondern auch beim Ausbringen der Farbe ein deutlich geringeres Gesundheitsrisiko für den Anwender darstellen.

Ein weiterer Gegenstand der vorliegenden Erfindung betrifft ein Verfahren zur Erstellung einer Markierung auf einem Sportplatz, insbesondere einer Linienmarkierung, bei dem man die erfindungsgemäße Markierungsfarbe, gegebenenfalls nach Zugabe von Wasser, auf eine Sportplatzoberfläche, insbesondere auf eine Natur- oder Kunstrasenoberfläche ausbringt und trocknen lässt. Dieses Verfahren kann in analoger Weise auch mit Hilfe des erfindungsgemäßen Konzentrats durchgeführt werden, wobei die vor dem Ausbringen hinzugegebene Wassermenge entsprechend angepasst werden muss. Generell kann bei dem erfindungsgemäßen Verfahren zur Linienmarkierung die zugegebene Wassermenge durch den Anwender bestimmt und variabel angepasst werden. Die Wassermenge richtet sich nach der Untergrundbeschaffenheit und dem gewünschten Deckvermögen der Linienmarkierung. Der Anwender kann somit über wenige Versuche die für ihn günstigste Wassermenge selbst ermitteln. Es ist ebenso möglich, die erfindungsgemäße Markierungsfarbe ohne den weiteren Zusatz von Wasser zu verwenden.

Ein weiterer Gegenstand der vorliegenden Erfindung betrifft die Verwendung der erfindungsgemäßen Markierungsfarbe zur Erstellung einer Linienmarkierung auf einem Sportplatz.

Ein weiterer Gegenstand der vorliegenden Erfindung besteht in der Verwendung von Mikroglashohlkugeln in Markierungsfarben für Sportplätze zur Verbesserung des Reflexionsvermögens.

Die vorliegende Erfindung wird im Folgenden anhand von Beispielen verdeutlicht:

### Beispiel 1

### Herstellung von 1 kg einer erfindungsgemäßen Markierungsfarbe

Zu 446 g (44,6 Gew.- %) Wasser werden 2,0 g (0,20 Gew.- %) Entschäumer (BYK 012 von BYK CHEMIE), 2,5 g (0,25 Gew.- %) Konservierungsmittel (Acticide MBS von THOR), 4,5 g (0,45 Gew.- %) Dispergierhilfsmittel (Lopon 890 von BK Giulini), 4,5 g (0,45 Gew.- %) Verdickungsmittel (Bentone LT von ELEMENTIS) sowie 0,5 g (0,05 Gew.- %) Neutralisationsmittel (wässrige Natriumhydroxid-Lösung, 11 %ig) unter Mischen in einem Dissolver hinzugefügt. Hierzu werden anschließend 160 g (16 Gew.-%) Kreidemehl (Omyacarb 2-SV von OMYA) sowie 310g (31 Gew.-%) Titandioxid (Tioxide R-TC90 von HUNTSMAN) zugegeben und 20 Min. lang dispergiert. Zum Schluss erfolgt die Zugabe von 50 g (5 Gew.-%) einer wässrigen, pflanzenöl-basierten Harz-Emulsion mit einem Feststoffgehalt von 50 Gew.-% (Necowel 580 von Ashland-Südchemie-Kernfest) sowie 20 g (2 Gew.-%) Mikroglashohlkugeln (Scotchlite K25 von 3M). Nach einer Mischzeit von max. 3 Min. ist die Rasenmarkierungsfarbe fertig.

### Beispiel 2 (Vergleichsbeispiel)

### Herstellung von 1 kg einer Markierungsfarbe ohne Mikroglashohlkugeln

Zu Vergleichszwecken wurden die oben genannten Substanzen in den dort angegebenen Mengen jedoch ohne Mikroglashohlkugeln in ansonsten identischer Weise miteinander vermischt.

Zum Vergleich der beiden Markierungsfarben wurden diese nebeneinander auf eine gewöhnliche schwarz-weiß karierte Farbaufzugkarte mit einem Filmapplikator in einer Nassschichtdicke von 400 µm aufgetragen. Nach Trocknung der beiden Beschichtungen über 24 Stunden wurden die Messungen der Helligkeit mit Hilfe eines Mehrwinkelspektralphotometers (BYC-mac von BYK-GARDNER) vorgenommen, der für die Messung von Effektlacken in der Automobilindustrie entwickelt wurde. Der ermittelte dL*-Wert, der dem Helligkeitsunterschied zwischen der Farbe nach Beispiel 1 mit und ohne Glashohlkugeln nach Beispiel 2 entspricht, betrug beim 75 °-Winkel +0,40 und beim 110 °-Winkel sogar +2,60.

## Patentansprüche

1. Markierungsfarbe für Sportplätze, insbesondere Rasenmarkierungsfarbe, enthaltend:
a) 0,1 - 10 Gew.-% Mikroglashohlkugeln,
b) 0,1 - 20 Gew.-% eines wasserverdünnbaren Bindemittels gerechnet als Feststoffanteil
c) 1 - 60 Gew.-% an Pigmenten und Füllstoffen sowie
d) auf 100 Gew.-% ergänzte Anteile an Wasser
jeweils bezogen auf die Gesamtzusammensetzung der Markierungsfarbe.

2. Markierungsfarbe nach Anspruch 1,
**dadurch gekennzeichnet, dass**
die Mikroglashohlkugeln einen mittleren Außendurchmesser von 1 bis 200 µm, insbesondere von 35 bis 85 µm aufweisen.

3. Markierungsfarbe nach Anspruch 1 oder 2,
**dadurch gekennzeichnet, dass**
die Mikroglashohlkugeln eine Wandstärke von 0,5 bis 15 µm, insbesondere von 1 bis 10 µm aufweisen.

4. Markierungsfarbe nach einem der vorstehenden Ansprüche,
**dadurch gekennzeichnet, dass**
das wasserverdünnbare Bindemittel biologisch abbaubar ist.

5. Markierungsfarbe nach einem der vorstehenden Ansprüche,
**dadurch gekennzeichnet, dass**
das wasserverdünnbare Bindemittel ausgewählt ist aus wässrigen Dispersionen oder Emulsionen eines Natur- oder Kunstharzes, insbesondere eines Alkyd-, Polyvinylacetat- oder Polyacrylatharzes oder ihrer Copolymere, aus Leimen, insbesondere Casein- oder Knochenleim, Cellulose- oder Stärkederivaten, Wasserglaslösungen oder Mischungen von diesen.

6. Markierungsfarbe nach einem der vorstehenden Ansprüche,
**dadurch gekennzeichnet, dass** die Markierungsfarbe einen Wassergehalt von 20 bis 80 Gew.-% aufweist, insbesondere von 30 bis 70 Gew.-%, jeweils bezogen auf die Gesamtzusammensetzung der Markierungsfarbe.

7. Markierungsfarbe nach einem der vorstehenden Ansprüche,
**dadurch gekennzeichnet, dass** die Pigmente ausgewählt sind aus Titandioxiden, Zinkoxid, Zinksulfid oder Mischungen von diesen.

8. Markierungsfarbe nach einem der vorstehenden Ansprüche,
**dadurch gekennzeichnet, dass** die Markierungsfarbe anorganische Füllstoffe enthält, die insbesondere ausgewählt sind aus Silikaten, Metalloxiden, Metallcarbonaten, Erdalkalisulfaten, Erdalkalisilikaten oder Mischungen von diesen.

9. Markierungsfarbe nach einem der vorstehenden Ansprüche,
**dadurch gekennzeichnet, dass** die Markierungsfarbe 30 - 55 Gew.-% an Pigmenten und anorganischen Füllstoffen enthält.

10. Markierungsfarbe nach einem der vorstehenden Ansprüche,
**dadurch gekennzeichnet, dass**
die Markierungsfarbe weitere Hilfsstoffe enthält, ausgewählt aus Netzmitteln, Dispergierhilfsmitteln, Stabilisatoren, Verdickungsmitteln, Konservierungsstoffen, Filmbildnern, pH-Regulatoren, Tensiden, Weichmachern, optischen Aufhellern, Photostabilisatoren, Farbstoffen, Biozide, Wachsen, Tackifiern und Entschäumern.

11. Markierungsfarbe nach einem der vorstehenden Ansprüche,
**dadurch gekennzeichnet, dass**
die Markierungsfarbe weitestgehend frei von organischen Lösemitteln.

12. Verfahren zur Erstellung einer Markierung auf einem Sportplatz, insbesondere einer Linienmarkierung, bei dem man eine Markierungsfarbe nach einem der Ansprüche 1 bis 11, gegebenenfalls nach Zugabe von Wasser, auf eine Sportplatzoberfläche, insbesondere auf eine Natur- oder Kunstrasenoberfläche ausbringt und trocknen lässt.

13. Verwendung einer Markierungsfarbe nach einem der Ansprüche 1 bis 11 zur Erstellung einer Linienmarkierung auf einem Sportplatz.

14. Verwendung von Mikroglashohlkugeln in Markierungsfarben für Sportplätze zur Verbesserung des Reflexionsvermögens.

## Geänderte Patentansprüche

### Geänderte Patentansprüche gemäss Regel 137(2) EPÜ.

**1.** Verwendung einer Markierungsfarbe enthaltend
a) 0,1 - 10 Gew.-% Mikroglashohlkugeln,
b) 0,1 - 20 Gew.-% eines wasserverdünnbaren Bindemittels gerechnet als Feststoffanteil
c) 1-60 Gew.-% an Pigmenten und Füllstoffen sowie
d) auf 100 Gew.-% ergänzte Anteile an Wasser,
jeweils bezogen auf die Gesamtzusammensetzung der Markierungsfarbe, zur Erstellung einer Linienmarkierung auf einem Sportplatz.

**2.** Verwendung nach Anspruch 1,
**dadurch gekennzeichnet, dass**
die Mikroglashohlkugeln einen mittleren Außendurchmesser von 1 bis 200 µm aufweisen.

**3.** Verwendung nach Anspruch 1 oder 2,
**dadurch gekennzeichnet, dass**
die Mikroglashohlkugeln eine Wandstärke von 0,5 bis 15 µm aufweisen.

**4.** Verwendung nach einem der vorstehenden Ansprüche,
**dadurch gekennzeichnet, dass**
das wasserverdünnbare Bindemittel gemäß DIN-EN 13 432 biologisch abbaubar ist.

**5.** Verwendung nach einem der vorstehenden Ansprüche,
**dadurch gekennzeichnet, dass**
das wasserverdünnbare Bindemittel ausgewählt ist aus wässrigen Dispersionen oder Emulsionen eines Natur- oder Kunstharzes, aus Leimen, Cellulose- oder Stärkederivaten, Wasserglaslösungen oder Mischungen von diesen.

**6.** Verwendung nach einem der vorstehenden Ansprüche,
**dadurch gekennzeichnet, dass**
die Markierungsfarbe einen Wassergehalt von 20 bis 80 Gew.-% aufweist, jeweils bezogen auf die Gesamtzusammensetzung der Markierungsfarbe.

**7.** Verwendung nach einem der vorstehenden Ansprüche,
**dadurch gekennzeichnet, dass**
die Pigmente ausgewählt sind aus Titandioxiden, Zinkoxid, Zinksulfid oder Mischungen von diesen.

**8.** Verwendung nach einem der vorstehenden Ansprüche,
**dadurch gekennzeichnet, dass**
die Markierungsfarbe anorganische Füllstoffe enthält.

**9.** Verwendung nach einem der vorstehenden Ansprüche,
**dadurch gekennzeichnet, dass**
die Markierungsfarbe 30 - 55 Gew.-% an Pigmenten und anorganischen Füllstoffen enthält.

**10.** Verwendung nach einem der vorstehenden Ansprüche,
**dadurch gekennzeichnet, dass**
die Markierungsfarbe weitere Hilfsstoffe enthält, ausgewählt aus Netzmitteln, Dispergierhilfsmitteln, Stabilisatoren, Verdickungsmitteln, Konservierungsstoffen, Filmbildnern, pH-Regulatoren, Tensiden, Weichmachern, optischen Aufhellern, Photostabilisatoren, Farbstoffen, Biozide, Wachsen, Tackifiern und Entschäumern.

**11.** Verwendung nach einem der vorstehenden Ansprüche,
**dadurch gekennzeichnet, dass**
die Markierungsfarbe weitestgehend frei von organischen Lösemitteln.

**12.** Verwendung nach einem der Ansprüche 1 bis 11,
**dadurch gekennzeichnet, dass**
man die Markierungsfarbe auf eine Sportplatzoberfläche ausbringt und trocknen lässt.

**13.** Verwendung von Mikroglashohlkugeln in Markierungsfarben für Sportplätze zur Verbesserung des Reflexionsvermögens.

**14.** Verfahren zur Erstellung einer Farbmarkierung auf einem Sportplatz, insbesondere einer Linienmarkierung, bei dem man eine Markierungsfarbe nach einem der Ansprüche 1 bis 13, gegebenenfalls nach Zugabe von Wasser verwendet und diese auf die Sportplatzoberfläche, insbesondere auf eine Natur- oder Kunstrasenoberfläche, ausbringt und trocknen lässt.
